# EUROPÄISCHE PATENTSCHRIFT

(11) **EP 2 222 800 B1**
(45) Veröffentlichungstag und Bekanntmachung des Hinweises auf die Patenterteilung: **11.07.2012**
(21) Anmeldenummer: 08857966.9
(22) Anmeldetag: 05.12.2008
(51) Int. Cl.: C01F 17/00, C09D 11/02

(54) **DRUCKTINTE, DRUCKFARBE BZW. DRUCKPASTE**
PRINTING INK, PRINTING COLOR AND/OR PRINTING PASTE
ENCRE D'IMPRESSION, COULEUR D'IMPRESSION ET/OU PÂTE D'IMPRESSION

(30) Priorität: 07.12.2007 AT 19872007
(43) Veröffentlichungstag der Anmeldung: 01.09.2010
(73) Patentinhaber: Aerospace & Advanced Composites GmbH, 2700 Wiener Neustadt (AT)
(72) Erfinder: BACA, Lubos, 901 01 Malacky (SK); STEINER, Hannes, A-2340 Mödling (AT); STELZER, Nils, A-2441 Mitterndorf An Der Fischa (AT)
(74) Vertreter: Wildhack & Jellinek
(86) Internationale Anmeldenummer: PCT/AT2008/000434
(87) Internationale Veröffentlichungsnummer: WO 2009/070823

(56) Entgegenhaltungen:
- US-A1- 2002 130 303
- US-A1- 2003 215 378
- HAI GUO: "Green and red upconversion luminescence in CeO2:Er3+ powders produced by 785 nm laser" SOLID STATE CHEMISTRY, Bd. 180, Nr. 1, 27. Januar 2007 (2007-01-27), Seiten 127-131, XP002520038 online

## Beschreibung

Gegenstand der vorliegenden Erfindung ist eine fälschungsbehindernde bzw. fälschungssichere Drucktinte, Druckfarbe bzw. Druckpaste für Druckerzeugnisse, insbesondere für Banknoten, Ausweise, Wertkarten od. dgl. und Markierungsfarbe zur eindeutigen Markierung von Gegenständen gemäß dem Oberbegriff f des Anspruches 1.

In Zeiten immer raffinierter werdender Methoden zur Fälschung von Druckwerken, wie Banknoten, Schecks, Zahlungskarten, Pässen, Ausweisen usw. wird es immer dringender, dieser Tendenz Druckwerke der verschiedensten Art und der verschiedensten Werte entgegenzusetzen, welche, ohne aufzufallen, auf einfache Weise und rasch als tatsächliches Original klar zu erkennen sind und sich jedem Fälschungsvorgang mit Erfolg entziehen.

Grundlage für die vorliegende Erfindung ist das an sich bekannte, sogenannte Phänomen der "Upconversion-Lumineszenz", wie sie z.B. für CeO₂:Er³⁺-Pulver, also für durch dreiwertige Seltenerd-Metallionen dotierte Cer(IV)oxide, von Hai Guo im Journal of Solid State Chemistry, 180 (2007), Seiten 127 bis 131 beschrieben sind.

Es findet hierbei ganz grob gesprochen, bei Bestrahlung des dotierten Cer(IV)oxids mit Infrarot-Strahlung eine Emission von sichtbarem Licht mit höherer Frequenz und geringerer Wellenlänge statt.

In dem oben zitierten Artikel von Guo sind Untersuchungen des Upconversion-Effektes anhand der Lumineszenz von dotiertem Cer(IV)oxid näher beschrieben. Es ist dort auch die Herstellung der dieses Phänomen zeigenden Cer(IV)oxid-Pulver und die Abhängigkeit der Ergebnisse dieser Art von Lumineszenz von der Art der Arbeitsweise bei der Fällung der Oxide, der Ausbildungsform der Kristalle und der Erhitzung des Oxid-Materials auf bestimmte, höhere Temperaturen näher beschrieben. Es ist dort beschrieben, dass höhere Temperaturen beim Glühen zu Cer(IV)oxid-Kristalliten mit höheren Upconversion-Emissions-Intensitäten führen.

Angeregt durch die intensive Diskussion bezüglich der Upconversion-Lumineszenz von dotiertem Cer(IV)oxid war es Ziel der vorliegenden Erfindung, die vorliegenden Erkenntnisse zu nutzen und in die Praxis umzusetzen, was letztlich zu einer neuen Anwendung desselben für die bzw. bei der Entwicklung von neuartigen Druckfarben, Drucktinten, Druckpasten u. dgl. geführt hat, und dies insbesondere unter Einsatz eines einfachen und mit geringem Aufwand durchführbaren Herstellungsverfahrens.

Grundsätzlich ist zu den mit Seltenen Erdmetallen dotierten Ce(IV)oxid-Farbstoffen folgendes auszuführen:
Das Cer(IV)oxid ist ein kubisches Ceroxid, CeO₂, Raumgruppe Fm₃m.

Bevorzugt wird es dotiert mit Oxiden der folgenden Seltenen Erdmetalle bzw. mit folgenden Metallionen der Selten Erden: und ihrer Mischungen
Yb(III), Er(III), Gd(III), Eu(III) und Tb(III).

Weiters kann eine zusätzliche Dotierung des CeO₂ mit Ta(III) erfolgen.

Die Anregung zur "upconversion"-Lumineszenz ("Anti-Stokes-Lumineszenz") kann mittels Laser z.B. bei Wellenlängen λ = 980 nm bzw. 810 nm erfolgen. Die Wellenlängen der vom dotierten CeO₂ emittierten Lichtstrahlung liegen im sichtbaren Bereich des Spektrums und sind problemlos identifizierbar.

Farbe und Intensität der emittierten Strahlung ist, wie schon oben kurz erwähnt, abhängig von der Art der Dotierung, von den Konzentrationen der Dotierungselemente sowie weiters insbesondere auch von der Art der Durchführung der Synthese des dotierten Cer(IV)oxids selbst.

Weitere Anregungs-Wellenlängen neben den oben genannten Haupt-Wellenlängen sind λ = 1090 nm (sehr schwach) und λ = 810 nm/1064 nm (schwach).

Ergebnis der einschlägigen unfangreichen Untersuchungen war die Entwicklung von für den Einsatz in insbesondere feinen Druckfarben und in feinsten Drucktinten tatsächlich brauchbaren dotierten Cer(IV)oxiden mit Upconversion-Lumineszenz.

Somit ist Gegenstand der vorliegenden Erfindung eine wie eingangs erwähnte Druckfarbe od. dgl., welche die im kennzeichnenden Teil des Anspruchs s 1 genannten Merkmale aufweist.

Es soll an dieser Stelle kurz erwähnt sein, dass das erfindungsgemäße Cer(IV)oxid-Pigment in der neuen Druck-Farbe bzw. -Paste mittels Bestrahlung mit Infrarot-, insbesondere IR-Laserlicht zur aktiven Upconversion-Lumineszenz- bzw. Antistokes-Lumineszenz-Emission von Licht mit zumindest zwei charakteristischen Intensitätsmaxima bei unterschiedlichen Wellenlängen im sichtbaren Bereich des Spektrums anregbar ist.

Zum Herstellungsverfahren von Cer(IV)oxiden gemäß dem bisherigen Stand der Technik sei Folgendes näher ausgeführt:
Bisher bekannt gewesen ist zur Herstellung von Cer(IV)oxid und anderen oxidischen Leuchtstoffen eine übliche Ausfällung als Hydroxide und ein nach einem Trocknen erfolgendes Kalzinieren bei hohen Temperaturen, z.B. im Bereich von 900 bis 1500 °C.

Dieses bekannte Herstellungs-Verfahren führt zu kubischem CeO₂, das jedoch letztlich in Form von Partikeln mit recht unterschiedlichen, also keineswegs gleichmäßigen, Partikel- und Kristallitgrößen vorliegt.

Das Verfahren führt also zu vermehrter Agglomeration, zu größeren, jedoch ungleich großen Kristalliten und, was an sich von Vorteil wäre, wie bisher bekannt, zu erhöhter Upconversion-Lumineszenz der Partikel.

Ein großer Nachteil von auf diese Hochtemperatur-Weise hergestellten Cer(IV)oxid-Partikeln mit den soeben genannten wesentlichen Eigenschaften hinsichtlich der Anwendung in Druckfarben besteht insbesondere in der Unterschiedlichkeit der Partikelgrößen und weiters in den relativ großen Dimensionen der Cer(IV)oxid-Partikel selbst. Die auf diese herkömmliche Weise produzierbaren Cer(IV)oxid-Partikel, stehen also einem unproblematischen Einsatz in Druckfarben und Drucktinten, z.B. für den Banknoten-Druck, Computer-Druck usw. massiv entgegen.

Es war also ganz wesentliches Ziel der Erfindung, das auch erreicht worden ist, eine neue Druckfarbe, Drucktinte u. dgl. mit äußerst feinkörnigen, für ein Einarbeiten in Druckfarben und Drucktinten geeigneten Cer(IV)oxid-Upconversion-Leuchtstoff-Partikeln mit möglichst gleichmäßiger geringer Korngröße und trotz geringer Kristall- bzw. KristallitGröße relativ hoher Upconversion-Lumineszenz-Emission zu entwickeln.

Es bestand insbesondere die Forderung nach einem möglichst engem Komgrößen-Verteilungsspektrum.

Im Zuge intensiver Entwicklungsarbeit im Rahmen der Erfindung wurde ein neuer einfacher und kostengünstiger Weg zum Erhalt von Cer(IV)oxid-Partikelchen einheitlicher Mikro-Größe aufgefunden, welche die oben genannten Anforderungen erfüllen.

Ergebnis dieser Bemühungen ist die neue Druckfarbe, Drucktinte bzw. Druckpaste gemäß dem oben zitierten Anspruch 1.

Zu dem aus dem Stand der Technik bekannten Kalzinieren bei hoher Temperatur sei kurz auf den konventionellen Herstellungsprozess eingegangen:
Lösung (I): Wässrige Lösung von Cer(III)Salzen und Dotierungselement-Salzen, wie z.B. Yb(NO₃)₃
Lösung (II): Wässrige Lösung von Na₂S, NH₄OH, NH₄HCO₃, NH₄F od. dgl.

Die Fällung eines gemeinsamen Hydroxid-Niederschlags erfolgt durch Zugabe von Lösung (I) zu Lösung (II).

Anschließend wird der Niederschlag abgetrennt und es erfolgt mehrmaliges Waschen desselben mit Wasser. Danach erfolgt die Kalzinierung, also eine Hitzebehandlung des Niederschlages bei hohen Temperaturen im Bereich von 900 bis 1500 °C in Anwesenheit der oxidierenden Umgebungsluft.

Die vorliegende Erfindung beruht hingegen auf einem Hydrothermal-Prozess bei der Herstellung des dotierten CeO₂ auf die folgende Art und Weise:
Es werden wieder zwei Lösungen hergestellt und zwar:
   Lösung (I): Wässrige Lösung von Cer(III)Salzen z.B. CeCl₃ mit Dotierungselement-Salzen, wie z.B. Yb(NO₃)₃ und Er(NO₃)₃.
   Lösung (II): Wässrige Lösung von Na₂S, NH₄OH od. dgl.

Es erfolgt dann eine Fällungsreaktion durch langsame Zugabe der Lösung (I) zu der Lösung (II), wobei ein seltenerdmetall-dotierter Cer-Niederschlag gebildet wird.

Danach folgt eine Hydrothermal-Synthese, nämlich die Überführung des Niederschlags samt Mutterlauge aus dem Fällungsprozess in einen Autoklav, wo dann das Niederschlags-Mutterlaugen-Gemisch bis 96 h lang bei autogenem Druck auf eine Temperatur im Bereich von 200 bis 500, vorzugsweise von 200 bis 230°C, insbesondere auf 210 bis 220°C, erhitzt wird. Danach folgt die Aufarbeitung des hydrothermal behandelten Niederschlags durch mehrmaliges Waschen desselben ebenfalls mit Wasser und nachfolgendes übliches Trocknen desselben.

Ganz wichtig ist das nachfolgende Tempern bei Temperaturen von bis zu maximal 650°C, insbesondere bei 300 bis 650°C, vorzugsweise bei 350 bis 500°C.

Einige der wesentlichen Eigenschaften der Upconversion-Lumineszenz-Pigmente; wie sie gemäß der Erfindung erhalten werden, sind folgende:
Geringe und insbesondere gleichmäßige Korngrößen der dotierten Cer(IV)oxid-Pigmentpartikel, und daraus folgend äußerst günstige Einsatzeigenschaften, insbesondere im Hinblick auf deren Einsatz im Drucksektor.

Charakteristischer "Fingerprint" des Emissionsspektrums bei Bestrahlung mit IR-Licht.

Der "Fingerprint" ist durch die Art und Konzentration der Dotierungselemente veränderbar ist immer charakteristisch und immer leicht unterscheidend erkennbar.

Die charakteristische Upconversion-Emission erfolgt nun unter bzw. bei Anregung mit Laser-Licht mit ganz bestimmten Wellenlängen, wie z.B. oben angegeben.

Die neuen Pigmente sind stabil, lichtecht und temperaturbeständig, und zwar bis 1500 °C, also praktisch ewig haltbar.

Die neuen feinen Hydrothermal-Pigmente haben trotz der niedrigen Herstellungstemperatur eine relativ hohe Lumineszenz-Intensität und zeichnen sich durch unproblematische Sichtbar-Machbarkeit und somit einfache Detektierbarkeit aus.

Für die erfindungsgemäß vorgesehenen Druckzwecke selbstverständlich ist ein relativ stark lumineszierendes Pigment von Vorteil. Ein hydrothermal produziertes Pulver mit der Zusammensetzung (Atom% Seltene Erden) Er: 1,8 bis 2,2%, Yb: 0,5 bis 0,15% und Rest Cer entwickelt, wie gefunden wurde, die relativ höchste Upconversion-Leuchtkraft. Sie wurde gemäß dem Hydrothermal-Verfahren bei einer Temperatur von 220°C hergestellt.

Bevorzugte Beispiele für die Verwendung der neuen dotierten Cer(IV)oxid-Pigmente sind die folgenden:
Sie eignen sich für den Einsatz in Offset-Druckfarben, wobei eine Beimengung des neuartig hergestellten Pigments bis zu einer Obergrenze des Masseanteils von 15% erfolgen kann.

Sie eignen sich weiters ganz besonders für Tintenstrahl-Tinten in Beimengungsmengen von 1 bis 30 Gew.%, insbesondere von 1 bis 5 Gew.%, bzw. von 1 bis 3 Gew.-%.

Weitere Anwendungen sind etwa direkte Aufbringung einer die neuen Cer(IV)oxidpigmente enthaltenden Paste auf Metalloberflächen, z.B. zur Makierung von Ersatzteilen und die Aufbringung als Pulver oder Schlicker über ein Dosierventil zur Diebstahlsicherung von Objekten der verschiedensten Art.

Es war überraschend, dass man auf hydrothermalem Wege zu einem seltenerddotierten feinkörnigem Cer(IV)oxid gelangen kann, das bei Bestrahlung mit Licht geeigneter Wellenlänge zu Farben-Emissionen mit durchaus ausreichender Leuchtkraft gelangen kann, wodurch das Gebiet des Einsatzes dieser Upconversion-Pigmente wesentlich erweitert werden konnte.

Zu den weiteren vorteilhaften Ausführungsformen wird des neuen feinstrukturierten Cer(IV)oxids auf die Offenbarung in den folgenden Ansprüchen hingewiesen:
Dem Anspruch 2 ist ein Einsatz von dreiwertigem Tantal neben den Seltenerd-Dotationen des Cer(IV)oxid zu entnehmen, was zur Hebung des emittierten Upconversion-Lichtes führt.
Der Anspruch 3 nennt bevorzugte Einsatzmengen von Erbium und Ytterbium im Cer(IV)oxid-Pigment der neuen Druckfarben.
Gemäß dem Anspruch 4 ist günstigerweise vorgesehen, das Cer(IV) mit mehr als einem Seltenerdmetall zu dotieren, was ebenfalls zu erhöhter Upconversion - Lumineszenz beiträgt.
Ein wesentlicher weiterer Gegenstand der Erfindung besteht in dem Verfahren zur Herstellung der in den bei IR-Bestrahlung emittierten Upconversion-Licht emittierenden neuen Druckfarben eingesetzten, mit Seltenerdmetallionen dotierten Cer(IV)oxid-Pigmente gemäß Anspruch 5.
Schließlich betrifft der Anspruch 6 die Verwendung der seltenerdmetalldotierten Cer(IV)oxide als leicht zu identifizierendes, zur Upconversion-Emission von sichtbarem Licht befähigtes Pigment in Druckfarben, Drucktinten usw.

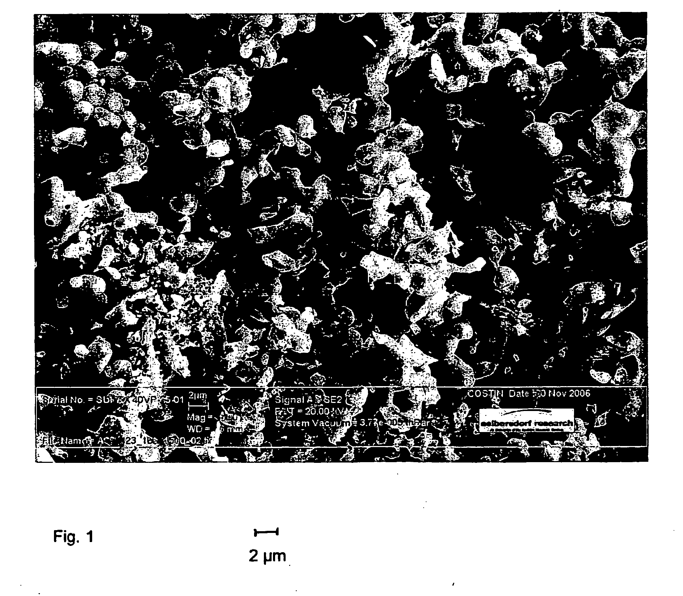

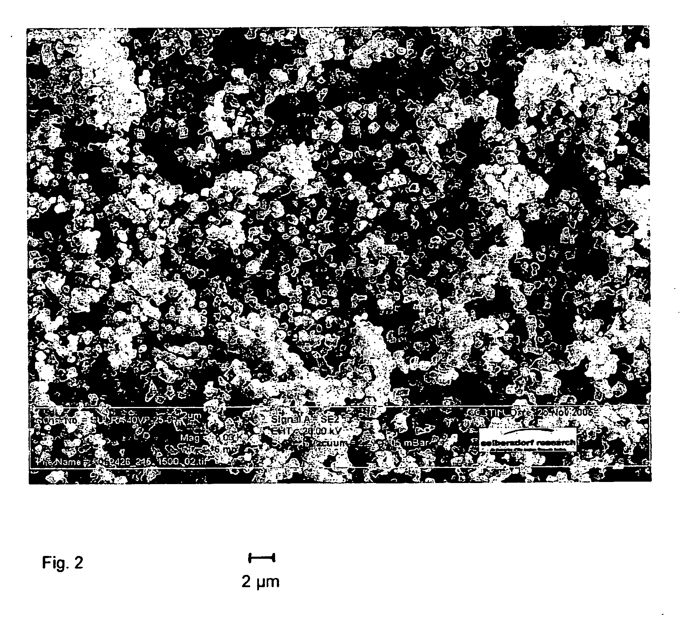

Anhand der Fig. 1 und 2 ist der Vorteil der erfindungsgemäß zum Einsatz gelangenden dotierten Cer(IV)oxid-Partikel ganz eklatant ersichtlich.

Die Fig. 1 zeigt die nach dem, dem Stand der Technik entsprechenden "Kalzinierverfahren" erhaltenen Partikel aus seltenerdmetall-dotiertem Cer(IV)oxid, welche an sich größer sind und insbesondere völlig unregelmäßige Korngrößen aufweisen und somit für einen Einsatz in Druckfarben u.dgl. nicht geeignet sind.

Die Fig. 2 zeigt die nach dem erfindungsgemäß vorgesehenen Hydrothermal-Verfahren erhaltenen Pigmente aus seltenerdmetall-dotiertem Cer(IV)oxid, welche sich durch besonders kleine Korngröße und hohe Größen-Gleichmäßigkeit auszeichnen, wobei hier noch außerdem die Körnchen voneinander nicht zusammengepackt, sondern voneinander isoliert sind, was dem Einsatz in Druckfarben und Drucktinten besonders entgegenkommt.

## Patentansprüche

1. Fälschungsbehindernde bzw. fälschungssichere Drucktinte, Druckfarbe bzw. Druckpaste für Druckerzeugnisse, insbesondere für Banknoten, Ausweisen od. dgl. und Markierungsfarbe zur eindeutigen Markierung von Gegenständen, welche zumindest ein Seltenerd-verbindungs-Pigment, insbesondere zumindest ein Seltenerdoxid-Pigment, neben anderen anorganischen und/oder organischen feinverteilten Farbpartikeln und den in derartigen -Farben bzw. -Pasten üblicherweise eingesetzten Substanzen und/oder Additiven, wie Wasser, organische leichtverdampfbare Flüssigkeiten, Füllstoffe, Emulgatoren, Dispersionsmittel, Lösungsvermittler, Viskositätsregler, Adhäsivstoffe u. dgl. enthält,
**dadurch gekennzeichnet,**
**dass** in derselben feine bzw. feinverteilte Körner und gleichmäßige Kornverteilung mit im Wesentlichen einheitlichem, engem Korngrößen-Spektrum aufweisende, gegebenenfalls bei Temperaturen bis maximal 650°C, vorzugsweise (hydrothermal und) temperbehandelte, Nano- bis Mikro-Partikel aus auf hydrothermalem Weg erhaltenem Cer(IV)oxid enthalten sind, welches mit zumindest zwei dreiwertigen Seltenerd-Metallen bzw. mit zumindest zwei dreiwertige Seltenerd-Metalle in ihrem Raumgitter enthaltenden Verbindungen, insbesondere in einer Menge von 0,01 bis 5,2 Atom-%, vorzugsweise von 0,03 bis 1,80 Atom-%, angegeben als Seltenerd-Element und jeweils bezogen auf die Menge Cer(IV)oxid plus Dotierung, dotiert ist.

2. Tinte, Farbe bzw. Paste nach Anspruch 1, **dadurch gekennzeichnet, dass** in den Cer(IV)oxid-Nano- bis Mikro-Partikeln als Seltenerd-Dotierungselemente zumindest zwei dreiwertige Seltenerd-Metalle aus der Gruppe Yb, Er, Gd, Eu und Tb, insbesondere Er und Yb, und gegebenenfalls als zusätzliches Dotierungselement dreiwertiges Ta, enthalten sind.

3. Tinte, Farbe bzw. Paste nach Anspruch 1 oder 2,
**dadurch gekennzeichnet,**
**dass** sie Cer(IV)oxid-Pigment-Partikel mit 0,01 bis 1,80 Atom%, insbesondere 0,03 bis 0,8 Atom-%, Erbium und 0,03 bis 5,20 Atom-%, insbesondere 0,1 bis 1,0 Atom-%, Ytterbium als Dotation und jeweils Rest Cer(IV)oxid enthält.

4. Tinte, Farbe bzw. Paste nach einem der Ansprüche 1 bis 3,
**dadurch gekennzeichnet,**
**dass** in derselben das mit zumindest zwei Seltenerd(III)metallen dotierte Cer(IV)oxid-Pigment in einer Menge von 1 bis 30 % Gew.-%, insbesondere von 3 bis 10 Gew.-%, enthalten ist.

5. Verfahren zur Herstellung der in den Druck- bzw. Markierungstinten, -farben bzw. - pasten gemäß einem der Ansprüche 1 bis 4 einzusetzenden, mit Seltenerd(III)metallen bzw.-metall-ionen dotierten Cer(IV)oxid-Pigmente, **dadurch gekennzeichnet.**
- **dass** dieselben auf hydrothermalem Wege, gewonnen sind,
- indem eine wässerige Lösung, enthaltend ein Cer(III)-Salz, insbesondere CeCl₃ oder Ce(NO₃)₃ oder organische Cer-Salze, wie insbesondere Cer-Oxalate, -Acetate und/oder
- Acetylacetonate, und zumindest zwei Seltenerd-Salze,insbesondere Seltenerd-Chloride oder -Nitrate bzw. organische Seltenerd-Salze, wie insbesondere Seltenerd-Oxalate, - Acetate und/oder -Acetylacetonate, langsam in die wässerige Lösung mindestens eines, bevorzugt basisch reagierenden, Alkali- bzw. Pseudoalkali-Salzes oder -Hydroxids, vorzugsweise eines Natrium-, Kalium- oder Ammoniumsalzes, insbesondere in eine wässrige Na₂S, NH₄OH- oder NH₄F-Lösung, eingebracht wird,
- **dass** der bei dieser Fällung unmittelbar gebildete Niederschlag zusammen mit der Mutterlauge in einem Autoklav bei autogenem Druck in Gegenwart von Luft oder Sauerstoff auf eine Temperatur im Bereich von 200 bis 500°C, insbesondere von 200 bis 230°C, und während einer Zeit bis 96 Stunden, insbesondere von 24 bis 72 Stunde, lang, erhitzt wird,
- **dass** das so erhaltene feinstverteilte, freie, voneinander unabhängige Nano- bzw. Mikropartikel von mit zumindest zwei Seltenerd(III)metallen bzw. -metallionen dotiertem Cer(IV)oxid/hydroxid aufweisende Partikel-Gut nach Abtrennen der Mutterlauge, einem mehrmaligem Waschen mit Wasser, und gegebenenfalls danach erfolgendem Trocknen, unterworfen wird, und
- **dass** bevorzugter Weise das so erhaltene, gewaschene und gegebenenfalls getrocknete Nano- bzw. Mikropartikel-Pulver auf Basis von, mit zumindest zwei Seltenerd(III)metallen dotiertem Cer(IV)oxid einer Temper-Behandlung bei zumindest 300°C, vorzugsweise bei 300 bis 650°C, insbesondere bei 350 bis 500°C, unterworfen wird.

6. Verwendung der in den Ansprüchen 1 bis 4 genannten mit zumindest zwei Seltenerd(III)-Metallen dotierten feinen Cer(IV)oxid-Pigmente, für die Bereitung bzw. Herstellung von fälschungsbehindernden bzw. fälschungssicheren Drucktinten, Druckfarben bzw. Druckpasten für Druckerzeugnisse, insbesondere für Banknoten, Ausweisen oder dergleichen und von Markierungsfarben bzw. -tinten oder -pasten zur eindeutigen Markierung von Gegenständen, mit der Maßgabe, dass die in denselben enthaltenen, mit zumindest zwei Seltenerd(III)Metallen dotierten Cer(IV)oxid-PigmentPartikel nach einem Verfahren gemäß Anspruch 5 hergestellt sind.

## Claims

1. Forgery-impeding or forgery-proof printing ink, printing colour or printing paste for printed material, particularly for bank-notes, cards or the like, and marking colour for unambiguously marking objects, which contains at least one pigment of rare earth compound, particularly a pigment of rare earth oxide, apart from other inorganic and/or organic finely divided colour particles and the substances and/or additives usually employed in such colours or pastes, such as water, organic easily vaporizable liquids, fillers, emulsifiers, dispersion media, dissolving intermediaries, viscosity regulators, adhesive agents and the like,
**characterised in**
**that** nano to micro-particles are contained in it which comprise fine or finely divided grains and have a regular grain distribution with substantially uniform, narrow grain-size spectrum and optionally are treated at temperatures up to 650°C in maximum, preferably (hydro-thermally and) tempered, of cerium (IV) oxide, obtained in a hydro-thermal way and doped with at least two three-valent rare earth metals or with at least two three-valent rare earth metals in their space lattice containing compounds, particularly in an amount of 0.01 to 5.2 atom percent, preferably of 0.03 to 1.80 atom percent, indicated as a rare earth element and each referring to the amount of cerium (IV) oxide plus doping.

2. Ink, colour or past according to claim 1, **characterised in that** at least two three-valent rare earth metals of the group of Yb, Er, Gd, Eu and Tb, particularly Er and Yb, and optionally as an additional doping element three-valent Ta, are contained as rare earth doping elements in the nano to micro-particles of cerium (IV) oxide.

3. Ink, colour or past according to claim 1 or 2, **characterised in that** it contains particles of cerium (IV) oxide comprising 0.01 to 1.80 atom percent, particularly 0.03 to 0.8 atom percent, of erbium, and 0.03 to 5.20 atom percent, particularly 0.1 to 1.0 atom percent, of ytterbium as a doping and residual cerium (IV) oxide respectively.

4. Ink, colour or past according to any of claims 1 to 3, **characterised in** n that the pigment of cerium (IV) oxide doped at least two rare earth (III) metals is contained in it in an amount of 1 to 30 % by weight, particularly of 3 to 10 % by weight.

5. A method for producing the pigments of cerium (IV) oxide doped with rare earth (III) metals or metal ions utilised in the printing or marking inks, colours or pastes according to any of claims 1 to 4, **characterised in**
- **that** they are obtained in a hydro-thermal way,
- by introducing an aqueous solution, containing a cerium (III) salt, particularly CeCl₃ or Ce(NO₃)₃ or organic cerium salts, such as in particular cerium oxalates, acetates and/or acetyl acetonates, and at least two rare earth salts, particularly rare earth chlorides or nitrates or organic rare earth salts, such as in particular rare earth oxalates, acetates and/or acetyl acetonates, are introduced slowly in the aqueous solution of at least one preferably basically reacting, alkaline or pseudo-alkaline salt or hydroxide, preferably a basically reacting sodium, potassium or ammonium salt, particularly in an aqueous Na₂S, NH₄OH or NH₄F solution,
- **that** the precipitation directly formed at this precipitating procedure is heated together with the mother lye in an autoclave at an autogenous pressure in the presence of air or oxygen to a temperature in the range of 200 to 500°C, particularly from 200 to 230°C, and during a period up to 96 hours, particularly from 24 to 72 hours,
- **that** the particulate material comprising free finely divided nano- or micro-particles independent from one another, thus obtained, of cerium (IV) oxide/hydroxide doped with at least two rare earth (III) metals or metal ions, after separation of the mother lye, is subjected to repeated washing with water, and optionally subsequent drying, and
- **that** in a preferred manner the nano- or micro-particle powder, thus obtained, washed and optionally dried, on the base of cerium (IV) oxide doped with at least two rare earth (III) metals is subjected to a tempering treatment at at least 300°C, preferably at 300 to 650°C, particularly at 350 to 500°C.

6. The use of the fine pigments of cerium (IV) oxide doped with at least two rare earth (III) metals, as mentioned in claims 1 to 4, for the preparation or production of forgery-impeding or forgery-proof printing ink, printing colour or printing paste for printed material, particularly for bank-notes, cards or the like, and of marking colours or inks or pastes for unambiguously marking objects, with the proviso that the pigment particles of cerium (IV) oxide doped with at least two rare earth (III) metals and contained in them are produced according to a method according to claim 5.

## Revendications

1. Encre d'impression, couleur d'impression et/ou pâte d'impression anti-contrefaçon ou infalsifiable pour des produits d'impression, en particulier pour des billets de banque, des cartes ou pareil, et couleur de marquage pour le marquage univoque des objets, qui contient au moins un pigment d'un composé de terre rare, particulièrement au moins un pigment d'un oxyde de terre rare, outre des autres particules de couleur inorganiques et/ou organiques finement distribués, et les substances et/ou additives usuellement utilisées dans telles couleurs ou pâtes, comme de l'eau, des liquides organiques facilement évaporables, des charges, des émulsifiants, des agents dispersants, des agents de solubilisation, des régulateurs de viscosité, des adhésifs et pareil,
**caractérisé en ce**
**que** des nano particules jusqu'à microparticules d'oxyde de cérium (IV), obtenu par voie hydrothermique, sont contenus dans celle-ci, qui comprennent des grains fins ou finement distribués ayant une distribution de grain régulier et un spectre de grandeurs de grain étroit sensiblement uniforme, le cas échéant traités aux températures jusqu'à 650°C en maximum, préférablement (d'une façon hydrothermique et) par trempe, ledit oxyde de cérium (IV) étant dopé avec au moins deux métaux à de terres rares de trois valences ou au moins de deux composés contenant des métaux de terres rares de trois valences dans leurs réseaux spatiales, en particulier à une quantité de 0,01 à 5,2 pour-cent atomiques, préférablement de 0,03 à 1,80 pour-cent atomiques, indiqués comme un élément de terres rares et respectivement par rapport à la quantité d'oxyde de cérium (IV) plus le dopage.

2. Encre, couleur ou pâte selon la revendication 1, **caractérisé en ce, qu'**au moins deux métaux de terres rares de trois valences de la groupe d'Yb, d'Er, de Gd, d'Eu et de Tb, particulièrement d'Er et d'Yb, sont contenues comme des éléments de dopage aux terres rares dans les nano particules jusqu'à microparticules d'oxyde de cérium (IV) et, le cas échéant, Ta à trois valences comme un élément additionnel de dopage.

3. Encre, couleur ou pâte selon la revendication 1 ou 2, **caractérisé en ce, qu'**elle contient des particules de pigment d'oxyde de cérium (IV) avec de 0,01 à 1,80 pour-cent atomiques, en particulier 0,03 à 0,8 pour-cent atomiques d'erbium et de 0,03 à 5,20 pour-cent atomiques, en particulier 0,1 à 1,0 pour-cent atomiques d'ytterbium comme dopage et d'oxyde de cérium (IV) respectivement résiduel.

4. Encre, couleur ou pâte selon une quelconque des revendications 1 à 3,
**caractérisé en ce,**
**que** le pigment d'oxyde de cérium (IV) dopé avec au moins deux métaux de terres rares (III) y est contenu à une quantité d'1 à 30 % en poids, particulièrement de 3 à 10 % en poids.

5. Procédé de production des pigments d'oxyde de cérium (IV) dopé avec des métaux de terres rares (III) ou des ions des métaux de terres rares (III) utilisé dans les encres, couleurs ou pâtes d'impression ou de marquage selon une quelconque des revendications 1 à 4, **caractérisé en ce,**
- **que** ceux-ci sont obtenus par voie hydrothermique,
- en introduisant une solution aqueuse, qui contient un sel de cérium (III), en particulier de CeCl₃ ou de Ce(NO₃)₃ ou des sels organiques de cérium, comme en particulier des oxalates de cérium, des acétates de cérium et/ou des acétylacétonates de cérium, et au moins deux sels de terres rares, en particulier des chlorures de terres rares ou des nitrates de terres rares ou des sels organiques de terres rares, comme en particulier des oxalates de terres rares, des acétates de terres rares et/ou des acétylacétonates de terres rares, lentement dans la solution aqueuse d'au moins un sel ou hydroxyde d'alcali ou pseudo-alcali, préférablement réagissant de manière basique, de préférence d'un sel de sodium, de potassium ou d'ammonium, en particulier dans une solution aqueuse de Na₂S, de NH₄OH ou de NH₄F,
- **que** le précipité formé immédiatement lors de cette précipitation conjointement avec la lessive mère est chauffé dans un autoclave avec une pression autogène en présence de l'air ou de l'oxygène à une température dans la gamme de 200 à 500°C, en particulier de 200 à 230°C, et pendant une période jusqu'à 96 heures, en particulier de 24 à 72 heures,
- **que** le nano particule ou microparticule ainsi obtenu finement distribué, libre, indépendant l'un de l'autre du matériau de particules comprenant d'oxyde/hydroxyde de cérium (IV) dopé avec au moins deux métaux de terres rares (III) ou deux ions des métaux de terres rares (III), après séparation de la lessive mère, est soumis à un lavage répété avec de l'eau, le cas échéant, effectuant après un séchage, et
- **que** d'une manière préférée le poudre de nano particules ou microparticules ainsi obtenu, lavé et, le cas échéant séché à base de d'oxyde de cérium (IV) dopé avec au moins deux métaux de terres rares (III) est soumis à un traitement de recuit à au moins 300°C, préférablement à 300 à 650°C, en particulier à 350 à 500°C.

6. L'utilisation des pigments fins d'oxyde de cérium (IV) mentionnés aux revendications 1 à 4, dopé avec au moins deux métaux de terres rares (III) pour la préparation ou la production des encres d'impression, des couleurs d'impression et/ou des pâtes d'impression anti-contrefaçons ou infalsifiables pour des produits d'impression, en particulier pour des billets de banque, des cartes ou pareil, et des couleurs, des encres ou des pâtes de marquage pour le marquage univoque des objets, supposant que les particules y contenus de pigment d'oxyde de cérium (IV) dopé avec au moins deux métaux de terres rares (III) sont produits selon un procédé selon la revendication 5.
